# EUROPÄISCHE PATENTSCHRIFT

(11) **EP 2 362 065 B1**
(45) Veröffentlichungstag und Bekanntmachung des Hinweises auf die Patenterteilung: **12.02.2020**
(21) Anmeldenummer: 11001266.3
(22) Anmeldetag: 16.02.2011
(51) Int. Cl.: F01D 5/14, F01D 9/04, F02K 3/06

(54) **Nebenstromkanal mit Nachleitschaufelkranz in einem Turbofantriebwerk**
Bypass duct with guide vane ring in a turbofan engine
Canal de dérivation avec couronne d'aubes statoriques dans un turboréacteur avec soufflante

(30) Priorität: 26.02.2010 DE 102010002394
(43) Veröffentlichungstag der Anmeldung: 31.08.2011
(73) Patentinhaber: Rolls-Royce Deutschland Ltd & Co KG, 15827 Blankenfelde-Mahlow (DE)
(72) Erfinder: Clemen, Carsten, Dr., 15749 Mittenwalde (DE)
(74) Vertreter: Hoefer & Partner Patentanwälte mbB

(56) Entgegenhaltungen:
- EP-A1- 1 756 406
- US-A- 2 928 648
- US-A- 3 617 147
- US-A- 4 989 406
- US-A- 5 740 674
- US-A- 6 082 966

## Beschreibung

Die Erfindung betrifft den Nebenstromkanal eines Turbofantriebwerk, der in Umfangsrichtung in regelmäßigem Abstand angeordnete Nachleitschaufeln zum Entdrallen des vom Fan erzeugten Luftstroms sowie Stützstreben aufweist.

Turbofantriebwerke weisen hinter dem an der Lufteintrittsseite befindlichen Fan einen Strömungsteiler auf, der den vom Fan erzeugten Luftstrom in einen Kernluftstrom und einen Nebenluftstrom aufteilt. Der Nebenluftstrom strömt in einem von einer inneren, einen Kernstromkanal begrenzenden Seitenwand und einer sich auf dieser abstützenden Triebwerksverkleidung gebildeten Nebenstromkanal. Die Abstützung der Triebwerksverkleidung auf der inneren Seitenwand erfolgt zum einen durch die in regelmäßigem Abstand angeordneten Nachleitschaufeln (Nachleitradschaufeln) eines stromab vom Fan im Nebenstromkanal angeordneten, zur Entfernung des Dralls aus der vom Fan erzeugten Strömung dienenden Nachleitrades (Nachleitschaufelkranz) sowie durch die Anordnung zusätzlicher - aerodynamisch geformter, jedoch für die Stützfunktion stärker dimensionierter - Stützstreben. Die Stützstreben zur mechanischen Abstützung der Nebenstromkanalwände erzeugen zum einen Druckverluste und sind zum anderen für eine größere Länge und ein höheres Triebwerksgewicht verantwortlich. Darüber hinaus werden durch die zur Abstützung vorgesehenen Einbauten in Umfangsrichtung des Nebenstromkanals auf den Fan zurückwirkende statische Druckschwankungen erzeugt, die eine stabilere und kostenaufwendigere Auslegung des Fans erfordern. Die Anordnung und Ausbildung der Stützstreben und die damit verbundenen Wirkungen führen letztlich zu einem erheblichen Treibstoffverbrauch.

Ferner ist aus der US 5 704 674 A eine Anordnung von Nachleitschaufeln bekannt, welche gruppenweise mittels eines Stegs verbunden sind.

Weiterhin ist aus der US 6 082 966 A eine Anordnung von Nachleitschaufeln in einem Nachleitschaufelkranz bekannt, wobei die dem Nachleitschaufelkranz folgende Stützstrebe mit einer Nachleitschaufel zu einer Einheit verbunden ist.

Die US 3 617 147 A zeigt ferner eine Anordnung von Nachleitschaufeln, welche im Umfang entlang der Maschinenachse versetzt angeordnet sind.

Ferner ist aus der EP 1 756 406 A1 eine Anordnung von Nachleitschaufeln in einem Nachleitschaufelkranz bekannt, wobei der Nachleitschaufelkranz eine Vielzahl an Streben aufweist, welche tragflügelartig geformt sind.

Ferner zeigt die US 2 928 648 A einen Nachleitschaufelkranz, in welchem in Umfangsrichtung abwechselnd eine Nachleitschaufel und eine Stützstrebe mit tragflügelartiger Verkleidung angeordnet sind.

Aus der US 4 989 406 A ist weiterhin eine Anordnung von Nachleitschaufeln und leitschaufelartig verkleideten Streben bekannt, wobei die verkleideten Streben in Axialrichtung stromauf über den Nachleitschaufelkranz hinaus ragen.

Der Erfindung liegt daher die Aufgabe zugrunde, den Nebenstromkanal eines Turbofantriebwerks so auszubilden, dass das Triebwerksgewicht und die stromauf des Nachleitschaufelkranzes erzeugten, auf den Fan wirkenden statischen Druckschwankungen reduziert werden und letztlich der Treibstoffverbrauch des Triebwerks verringert wird.

Erfindungsgemäß wird die Aufgabe mit einem gemäß den Merkmalen des Patentanspruchs 1 ausgebildeten Nebenstromkanal gelöst. Zweckmäßige Weiterbildungen der Erfindung sind Gegenstand der Unteransprüche.

Ein stromab des Fans im Nebenstromkanal eines Turbofantriebwerks angeordneter Nachleitschaufelkranz zum Entdrallen des vom Fan erzeugten Luftstroms weist in gleichmäßigem Abstand in den Nachleitschaufelkranz jeweils anstelle einer Nachleitschaufel integrierte Nachleitschaufel-Stützstreben mit größerer Dicke und Sehnenlänge als die Nachleitschaufeln auf. Ein jeweils zwischen einer Saugseite der Nachleitschaufel-Stützstrebe und einer dieser saugseitig benachbarten Nachleitschaufel vorhandener Strömungskanal ist durch eine von der jeweiligen Ausbildung der Nachleitschaufel-Stützstrebe abhängige, geometrische Modifizierung dieser Nachleitschaufel gegenüber den weiteren Nachleitschaufeln erweitert, so dass in dem stromauf des Nachleitschaufelkranzes liegenden Bereich eine gleichmäßige Druckverteilung gewährleistet ist. Durch die Integration der Stützstreben anstelle von Nachleitschaufeln in den Nachleitschaufelkranz und dessen erfindungsgemäße Gestaltung können das Triebwerksgewicht und die Strömungsverluste reduziert werden. Außerdem ist trotz der eingefügten Nachleitschaufel-Stützstreben eine gleichmäßige Ausbildung des stromab des Nachleitschaufelkranzes erzeugten Umfangsdruckfeldes gewährleistet, so dass der Fanwirkungsgrad und die Fanstabilität verbessert und diesbezügliche Triebwerksgeräusche verringert werden.

Gemäß der Erfindung ist zur Erweiterung des Strömungskanals der von einer Sehnenlänge und einer axialen Sehnenlänge der modifizierten Nachleitschaufel eingeschlossene Staffelungswinkel der modifizierten Nachleitschaufel gegenüber dem Staffelungswinkel der anderen Nachleitschaufeln vergrößert, und der Vorderkantenwinkel und der Hinterkantenwinkel der modifizierten Nachleitschaufel sind zur Gewährleistung einer gleichmäßigen Luftabströmung am Nachleitschaufelkranz an den vergrößerten Staffelungswinkel angepasst und entsprechend vergrößert.

Die Geometrie sämtlicher Nachleitschaufeln ist jedoch bezüglich der Vorderkantenform, der Dicke und der Sehnenlänge identisch. Der Vorderkantenabstand aller den Nachleitschaufelkranz bildenden Nachleitschaufeln und Nachleitschaufel-Stützstreben ist ebenfalls identisch.

In weiterer Ausgestaltung der Erfindung sind die Nachleitschaufel-Stützstreben und die Nachleitschaufeln eines Nachleitschaufelkranzes in einem festen Zahlenverhältnis zueinander angeordnet, das vorzugsweise bei 1 : 3 oder 1 : 4 oder 1 : 5 oder 1 : 6 liegt.

Die Ausbildung der in den Nachleitschaufelkranz integrierten Nachleitschaufel-Stützstreben kann gleich oder unterschiedlich sein. In jedem Fall ist aber die Geometrie der modifizierten Nachleitschaufel an die jeweilige Geometrie der zugehörigen Nachleitschaufel-Stützstrebe angepasst. Die nicht modifizierten Nachleitschaufeln weisen eine übereinstimmende Geometrie auf.

Ein Ausführungsbeispiel der Erfindung wird anhand der Zeichnung, in der
- Fig. 1: eine Teilansicht einer Abwicklung eines stromab des Fans in einem Nebenstromkanal angeordneten Nachleitschaufelkranzes zum Entdrallen der Strömung; und
- Fig. 2: eine detaillierte Darstellung im Bereich der saugseitig auf eine Nachleitschaufel-Stützstrebe folgenden, zur Reduzierung des stromauf erzeugten statischen Druckfeldes modifizierten Nachleitschaufel
zeigt, näher erläutert.

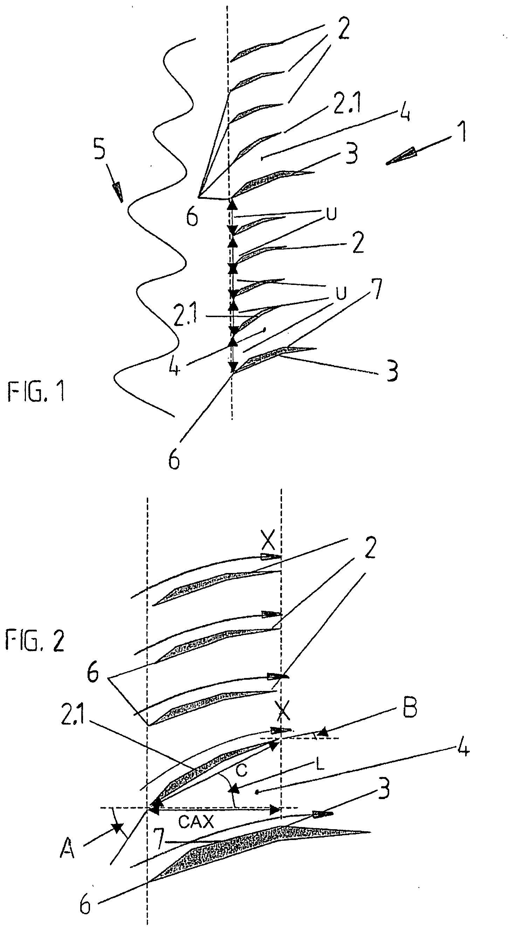

Wie Fig. 1 zeigt, umfasst der in Umfangsrichtung des Nebenstromkanals zwischen dessen Innen- und Außenwand (jeweils nicht dargestellt) angeordnete Nachleitschaufelkranz 1 eine Vielzahl von Nachleitschaufeln 2 (hier beispielsweise 33) und Nachleitschaufel-Stützstreben 3 (hier beispielsweise 11), die in regelmäßigem Abstand U zueinander angeordnet sind. Das heißt, die üblicherweise stromab des Nachleitschaufelkranzes 1 angeordneten - aerodynamisch verkleideten - Stützstreben sind in gleichmäßigem Abstand 5U, und zwar jeweils anstelle einer Nachleitschaufel 2, als Nachleitschaufel-Stützstreben 3 in den Nachleitschaufelkranz 1 integriert. Während die Nachleitschaufeln und Nachleitschaufel-Stützstreben in der vorliegenden Ausführungsform im Verhältnis 4 : 1 angeordnet sind, können auch andere Verhältnisse, beispielsweise 5 : 1 oder 3 : 1, vorgesehen sein. Die in den Nachleitschaufelkranz 1 integrierten Nachleitschaufel-Stützstreben 3 übernehmen hier die Stützfunktion der ansonsten stromab angeordneten Stützstreben und haben aufgrund ihrer an die Nachleitschaufeln 2 angepassten Schaufelform auch eine Leitfunktion zum Entdrallen der vom Fan zugeführten Strömung. Durch die Doppelfunktion der Nachleitschaufel-Stützstreben 3 kann das Triebwerksgewicht verringert und demzufolge der Treibstoffverbrauch reduziert werden.

Dem aufgrund der eingeschobenen Nachleitschaufel-Stützstreben 3 und deren gegenüber den kleineren Nachleitschaufeln 2 größerer Dicke und Sehnenlänge zu erwartenden Druckverlust sowie dem stromauf ausgebildeten ungleichmäßigen, auf den Fan wirkenden Umfangsdruckfeld 5 und dem erhöhten Lärmpegel wird durch eine geänderte Geometrie der jeweils saugseitig auf die Nachleitschaufel-Stützstrebe 3 folgenden Nachleitschaufel 2.1 begegnet. Bei gleichbleibenden Abstand U zwischen den Vorderkanten 6 der Nachleitschaufeln 2 und der Nachleitschaufel-Stützstreben 3 wird die Geometrie der gegenüber der Saugseite 7 der Nachleitschaufel-Stützstrebe 3 angeordneten Nachleitschaufel 2.1 so modifiziert, dass die Weite des zwischen diesen bestehenden Strömungskanals 4 durch einen größeren Staffelungswinkel L vergrößert wird. Der Staffelungswinkel L ist der von der Sehnenlänge C der Nachleitschaufel 2.1 und von der axialen Sehnenlänge CAX eingeschlossene Winkel.

Entsprechend der gegebenenfalls unterschiedlichen Geometrie der Nachleitschaufel-Stützstrebe 3 werden der Staffelungswinkel L geändert und gleichzeitig der Vorderkantenwinkel A und der Hinterkantenwinkel B der Nachleitschaufel 2.1 entsprechend angepasst, so dass die Abströmung (Pfeil X) an der modifizierten Nachleitschaufel 2.1 mit der Abströmung an den übrigen Nachleitschaufeln 2 im Wesentlichen übereinstimmt. Weitere Schaufelparameter wie entweder die Sehnenlänge C oder die axiale Sehnenlänge CAX, oder auch die Schaufeldicke und die Vorderkantenform bleiben unverändert. Die mechanischen Eigenschaften der modifizierten Nachleitschaufel 2.1 ändern sich somit nicht. Die durch die Integration der Stützstreben (Nachleitschaufel-Stützstreben 3) in den Nachleitschaufelkranz 1 zu erwartenden Druckverluste sowie der stromauf auf den Fan wirkende Druck können durch die Vergrößerung des Staffelungswinkels L in Kombination mit der Anpassung des Vorder- und Hinterkantenwinkels A, B um 30% bzw. 50% gesenkt werden, so dass die Betriebsstabilität und der Wirkungsgrad des Fans und der durch diesen verursachte Lärm und letztlich auch der Treibstoffverbrauch weiter verringert werden können.

### Bezugszeichenliste

- 1: Nachleitschaufelkranz (Teilabwicklung)
- 2: Nachleitschaufeln
- 2.1: saugseitig von 3 angeordnete modifizierte Nachleitschaufel
- 3: Nachleitschaufel-Stützstrebe
- 4: Erweiterter Strömungskanal zwischen 3 und 2.1
- 5: Umfangsdruckfeld
- 6: Vorderkanten von 2, 3
- 7: Saugseite von 3
- U: Abstand/Vorderkantenabstand von 2, 2.1, 3
- 5U: Abstand zwischen den Vorderkanten von 3
- L: Staffelungswinkel
- C: Sehnenlänge von 2.1
- CAX: axiale Sehnenlänge von 2.1
- A: Vorderkantenwinkel v. 2.1
- B: Hinterkantenwinkel v. 2.1
- Pfeil X: Abströmung der Luft an 2.1, 2

## Patentansprüche

1. Nebenstromkanal eines Turbofantriebwerks, der in Umfangsrichtung in regelmäßigem Abstand (U) angeordnete, einen Nachleitschaufelkranz bildende Nachleitschaufeln (2, 2.1) zum Entdrallen des vom Fan erzeugten Luftstroms sowie Nachleitschaufel-Stützstreben (3) zur Abstützung von Nebenstromkanalwänden aufweist,
- wobei der Abstand (U) zwischen Vorderkanten (6) der Nachleitschaufeln (2, 2.1) und Nachleitschaufel-Stützstreben (3) definiert ist,
**dadurch gekennzeichnet, dass**
- die Nachleitschaufel-Stützstreben (3):
- in gleichmäßigem Abstand (U) bezogen auf die Vorderkanten (6) jeweils anstelle einer Nachleitschaufel (2) in den Nachleitschaufelkranz (1) integriert und
- mit größerer Dicke und Sehnenlänge als die Nachleitschaufeln (2, 2.1) und
- mit an diese angepasster aerodynamischer Schaufelform zum Entdrallen der vom Fan zugeführten Strömung ausgebildet sind,
- wobei saugseitig benachbart zur jeweiligen Nachleitschaufel-Stützstrebe (3) eine modifizierte Nachleitschaufel (2.1) der Nachleitschaufeln (2) angeordnet ist,
- wobei die modifizierte Nachleitschaufel (2.1) gegenüber den weiteren Nachleitschaufeln (2) in Abhängigkeit von der jeweiligen Ausbildung der Nachleitschaufel-Stützstrebe (3) in der Geometrie modifiziert ist,
- wobei ein jeweils zwischen der Saugseite (7) der Nachleitschaufel-Stützstrebe (3) und der dieser saugseitig benachbarten modifizierten Nachleitschaufel (2.1) vorhandener Strömungskanal (4) zur Reduzierung der Druckspitzen eines sich stromauf aufbauenden Umfangsdruckfeldes (5) durch die modifizierte Nachleitschaufel (2.1) erweitert ist,
- wobei zur Erweiterung des Strömungskanals (4) der von einer Sehnenlänge (C) und einer axialen Sehnenlänge (CAX) der modifizierten Nachleitschaufel (2.1) eingeschlossene Staffelungswinkel (L) der modifizierten Nachleitschaufel (2.1) gegenüber dem Staffelungswinkel der anderen Nachleitschaufeln (2) vergrößert ist und
- wobei der Vorderkantenwinkel (A) und der Hinterkantenwinkel (B) der modifizierten Nachleitschaufel (2.1) zur Gewährleistung einer gleichmäßigen Luftabströmung (Pfeil X) am Nachleitschaufelkranz (1) an deren vergrößerten Staffelungswinkel (L) angepasst und der Hinterkantenwinkel (B) entsprechend vergrößert ist, so dass die Abströmung (Pfeil X) an der modifizierten Nachleitschaufel (2.1) mit der Abströmung an den übrigen Nachleitschaufeln (2) im Wesentlichen übereinstimmt.

2. Nebenstromkanal nach Anspruch 1, **dadurch gekennzeichnet, dass** die Geometrie sämtlicher Nachleitschaufeln (2, 2.1) bezüglich der Vorderkantenform, der Dicke und der Sehnenlänge identisch ist.

3. Nebenstromkanal nach Anspruch 1, **dadurch gekennzeichnet, dass** die Nachleitschaufel-Stützstreben (3) und die Nachleitschaufeln (2) eines Nachleitschaufelkranzes (1) in einem festen Zahlenverhältnis zueinander angeordnet sind.

4. Nebenstromkanal nach Anspruch 3, **dadurch gekennzeichnet, dass** das Zahlenverhältnis von Nachleitschaufel-Stützstreben zu Nachleitschaufeln zwischen 1 : 3 und 1 : 6 liegt.

5. Nebenstromkanal nach Anspruch 1, **dadurch gekennzeichnet, dass** die Ausbildung der in den Nachleitschaufelkranz (1) integrierten Nachleitschaufel-Stützstreben (3) gleich oder unterschiedlich ist.

## Claims

1. Bypass flow channel of a turbofan engine, having follow-up guide vanes (2, 2.1) which are arranged with a regular spacing (U) in a circumferential direction and form a follow-up guide vane ring and serve for the removal of swirl from the air flow generated by the fan, and having follow-up guide vane support struts (3) for supporting bypass flow channel walls,
- wherein the spacing (U) between leading edges (6) of the follow-up guide vanes (2, 2.1) and follow-up guide vane support struts (3) is defined,
**characterized in that**
- the follow-up guide vane support struts (3):
- are integrated into the follow-up guide vane ring (1), in each case instead of a follow-up guide vane (2), with a uniform spacing (U) with respect to the leading edges (6), and
- are formed with greater thickness and chord length than the follow-up guide vanes (2, 2.1) and
- with an aerodynamic vane shape adapted to the latter and serving for the removal of swirl from the flow fed by the fan,
- wherein a modified follow-up guide vane (2.1) of the follow-up guide vanes (2) is arranged adjacent to the respective follow-up guide vane support strut (3) on the suction side,
- wherein the modified follow-up guide vane (2.1), in comparison with the other follow-up guide vanes (2), is modified in terms of geometry in a manner dependent on the respective formation of the follow-up guide vane support strut (3),
- wherein a flow channel (4) which is situated in each case between the suction side (7) of the follow-up guide vane support strut (3) and the modified follow-up guide vane (2.1) adjacent thereto on the suction side is widened by way of the modified follow-up guide vane (2.1) for the purpose of reducing the pressure peaks of a circumferential pressure field (5) building up upstream,
- wherein, for the purpose of widening the flow channel (4), the stagger angle (L) of the modified follow-up guide vane (2.1) that is included by a chord length (C) and an axial chord length (CAX) of the modified follow-up guide vane (2.1) is enlarged in comparison with the stagger angle of the other follow-up guide vanes (2), and
- wherein the leading edge angle (A) and the trailing edge angle (B) of the modified follow-up guide vane (2.1), for the purpose of ensuring a uniform flow-off of air (arrow X) at the follow-up guide vane ring (1), are adapted to the enlarged stagger angle (L) thereof, and the trailing edge angle (B) is correspondingly enlarged such that the flow-off (arrow X) on the modified follow-up guide vane (2.1) substantially corresponds to the flow-off on the other follow-up guide vanes (2).

2. Bypass flow channel according to Claim 1, **characterized in that** the geometry of all the follow-up guide vanes (2, 2.1) is identical with respect to leading edge shape, thickness and chord length.

3. Bypass flow channel according to Claim 1, **characterized in that** the follow-up guide vane support struts (3) and the follow-up guide vanes (2) of a follow-up guide vane ring (1) are arranged with a fixed ratio to one another.

4. Bypass flow channel according to Claim 3, **characterized in that** the ratio of follow-up guide vane support struts (3) to follow-up guide vanes is between 1:3 and 1:6.

5. Bypass flow channel according to Claim 1, **characterized in that** the formation of the follow-up guide vane support struts (3) integrated into the follow-up guide vane ring (1) is identical or different.

## Revendications

1. Canal de flux secondaire d'un turboréacteur à soufflante, qui présente des aubes directrices arrière (2, 2.1) formant une couronne d'aubes directrices arrière, disposées à une distance régulière (U) dans la direction périphérique, pour éliminer le tourbillonnement du flux d'air généré par la soufflante, ainsi que des montants de support d'aubes directrices arrière (3) pour le support des parois du canal de flux secondaire,
- la distance (U) étant définie entre les arêtes avant (6) des aubes directrices arrière (2, 2.1) et les montants de support d'aubes directrices arrière (3),
**caractérisé en ce que**
- les montants de support d'aubes directrices arrière (3) :
- sont intégrés dans la couronne d'aubes directrices arrière (1) à distance régulière (U) par rapport aux arêtes avant (6) à chaque fois à la place d'une aube directrice arrière (2), et
- sont réalisés avec une plus grande épaisseur et longueur d'arc que les aubes directrices arrière (2, 2.1) et
- avec une forme d'aube aérodynamique adaptée à celles-ci pour éliminer le tourbillonnement de l'écoulement acheminé par la soufflante,
- une aube directrice arrière modifiée (2.1) des aubes directrices arrière (2) étant disposée du côté aspiration, à côté du montant de support d'aubes directrices arrière (3) respectif,
- la géométrie de l'aube directrice arrière modifiée (2.1) étant modifiée par rapport aux autres aubes directrices arrière (2) en fonction de la réalisation respective du montant de support d'aubes directrices arrière (3),
- un canal d'écoulement (4), prévu à chaque fois entre le côté aspiration (7) du montant de support d'aubes directrices arrière (3) et l'aube directrice arrière modifiée (2.1) adjacente à celui-ci du côté aspiration, étant élargi par l'aube directrice arrière modifiée (2.1) pour réduire les pointes de pression d'un champ de pression périphérique (5) s'établissant en amont,
- pour l'élargissement du canal d'écoulement (4), l'angle d'incidence (L) de l'aube directrice arrière modifiée (2.1) formé par une longueur d'arc (C) et une longueur d'arc axiale (CAX) de l'aube directrice arrière modifiée (2.1) étant agrandi par rapport à l'angle d'incidence des autres aubes directrices arrière (2) et
- l'angle d'arête avant (A) et l'angle d'arête arrière (B) de l'aube directrice arrière modifiée (2.1), pour garantir un écoulement d'air uniforme (flèche X) au niveau de la couronne d'aubes directrices arrière (1), étant adaptés à son angle d'incidence agrandi (L) et l'angle d'arête arrière (B) étant augmenté de manière correspondante, de telle sorte que l'écoulement (flèche X) au niveau de l'aube directrice arrière modifiée (2.1) coïncide essentiellement avec l'écoulement au niveau des aubes directrices arrière (2) restantes.

2. Canal de flux secondaire selon la revendication 1, **caractérisé en ce que** la géométrie de toutes les aubes directrices arrière (2, 2.1) est identique en termes de forme d'arête avant, d'épaisseur et de longueur d'arc.

3. Canal de flux secondaire selon la revendication 1, **caractérisé en ce que** les montants de support d'aubes directrices arrière (3) et les aubes directrices arrière (2) d'une couronne d'aubes directrices arrière (1) sont disposés dans un rapport en nombre fixe les uns par rapport aux autres.

4. Canal de flux secondaire selon la revendication 3, **caractérisé en ce que** le rapport en nombre des montants de support d'aubes directrices arrière aux aubes directrices arrière est compris entre 1:3 et 1:6.

5. Canal de flux secondaire selon la revendication 1, **caractérisé en ce que** la réalisation des montants de support d'aubes directrices arrière (3) intégrés dans la couronne d'aubes directrices arrière (1) est identique ou différente.
